# EUROPEAN PATENT SPECIFICATION

(11) **EP 4 330 461 B1**
(45) Date of publication and mention of the grant of the patent: **20.05.2026**
(21) Application number: 22724038.9
(22) Date of filing: 20.04.2022
(51) Int. Cl.: D21C 11/00

(54) **A GREEN LIQUOR TREATMENT ARRANGEMENT AND METHOD FOR CONTROLLING MIXING OF GREEN LIQUOR AND A FLOCCULATION AGENT**
EINE VORRICHTUNG ZUR BEHANDLUNG VON GRUNLAUGE UND VERFAHREN ZUR STEUERUNG DER MISCHUNG VON GRÜNLAUGE UND FLOCKUNGSMITTEL
DISPOSITIF DE TRAITEMENT DE LIQUEUR VERTE ET PROCÉDÉ DE COMMANDE DE MÉLANGE DE LIQUEUR VERTE ET D'UN AGENT DE FLOCULATION

(30) Priority: 26.04.2021 SE 2150525
(43) Date of publication of application: 06.03.2024
(73) Proprietor: Valmet AB, 851 94 Sundsvall (SE)
(72) Inventor: SKARIUS, Johan, 66341 Hammarö (SE); ROWE, Nicholas, 65342 Karlstad (SE)
(74) Representative: Novagraaf Group
(86) International application number: PCT/EP2022/060451
(87) International publication number: WO 2022/228973

(56) References cited:
- WO-A1-2009/137865
- WO-A1-2019/098899
- WO-A1-97/35655
- WO-A1-98/14258
- DE-A1- 2 550 131
- JP-A- 2007 138 336
- US-A- 4 871 459

## Description

### TECHNICAL FIELD

The present invention relates to a green liquor treatment arrangement for controlling mixing of green liquor and a flocculation agent before supplying them to a clarifier. The invention also relates to a method for controlling mixing of green liquor and a flocculation agent, and the invention is suitably used for flocculating green liquor before clarifying.

### BACKGROUND

Green liquor is a dissolved smelt of sodium carbonate, sodium sulfide and other compounds from the recovery boiler in the kraft process, and apart from these chemicals the green liquor also comprises insoluble compounds such as metal oxides, silicates, soot and other impurities.

A conventional method of green liquor purification utilizes a sedimentation technique, where the heavy particles, in the form of dregs, settle towards the bottom of large settling tanks known as clarifiers, using the density difference between the dregs and the green liquor. The overflow obtained from these clarifiers is the clarified green liquor, and the underflow (from bottom of the tank) contains the settled dregs content. However, these sedimentation tanks need to be quite large, and often integrated with a green liquor storage capacity of about twelve hours.

The efficiency of the sedimentation varies, however, depending among other things on fluctuations in the pulp production since this also causes variations in the flow of green liquor supplied to the clarifier. As a result, smaller particles in particular may remain in the green liquor even after passing the clarifier, and this decreases efficiency in downstream processes and increases the need for maintenance.

In order to resolve this, the clarifiers have been improved further by adding various flocculants to increase sedimentation rate, and often polymeric flocculants are used when production rate of clarified green liquor needs to be increased, or when a smaller less expensive settling tank is considered in new mill projects. However, even with added flocculants there is a risk that impurities remain and that quality of the green liquor after clarification is uneven. It would be highly advantageous to be able to resolve this problem and achieve a uniform green liquor with very low levels of particles. In DE 25 50 131 is disclosed a flocculant mixer. However, this device will not provide a sufficient effect. There is therefore a need for improvements within this area.

### SUMMARY

The object of the present invention is to eliminate or at least to minimize the problems discussed above. This is achieved by a green liquor treatment arrangement and method for controlling mixing of green liquor and a flocculation agent according to the appended independent claims.

The mixing assembly for controlling mixing of green liquor and a flocculation agent according to the present invention comprises a mixing vessel having a first end and a second end, a vessel inlet for supplying green liquor and flocculation agent to the mixing vessel in a vicinity of the first end, and a vessel outlet for removing flocculated green liquor from the mixing vessel in a vicinity of the second end. The mixing assembly also comprises a stirring device that is rotatably arranged in the vicinity of the first end for mixing the green liquor and flocculation agent by stirring. Furthermore, the mixing vessel has a length from a center of the vessel inlet to a center of the vessel outlet, and the mixing vessel also has a maximum width that is perpendicular to a center axis from the first end to the second end, and wherein said length is at least 1.5 times the maximum width. Thereby, the dimensions of the mixing vessel allow for the green liquor and flocculation agent to remain inside the mixing vessel for a long time to ensure on the one hand that thorough mixing of the green liquor with the flocculation agent is achieved, and on the other hand that turbulence in the mixing vessel caused by the mixing is gradually decreased until the green liquor and the flocculation agent are discharged through the outlet opening. This is advantageous in achieving a flocculated green liquor of high quality that is suitable for supplying to a clarifier. Thus, providing the length of at least 1.5 times the maximum width of the mixing vessel serves to enable decrease of turbulence in the mixed green liquor and flocculation agent.

Suitably, the length is at least 2 times the maximum width, preferably at least 2.2 times the maximum width. Increasing the length further in relation to the width allows for an even longer stay in the mixing vessel, which is especially beneficial in allowing turbulence to decrease before the green liquor and flocculation agent are discharged.

Also, the mixing vessel may suitably comprise at least one baffle, preferably a plurality of baffles, that is/are arranged on an interior wall of the mixing vessel in the vicinity of the first end. Thereby, turbulence is increased so that a thorough mixing of the green liquor and flocculation agent is achieved.

Suitably, each baffle of the mixing assembly is arranged in the vicinity of the first end. Thereby, turbulence may be increased at the first end close to the inlet so that the mixing takes place soon after the green liquor and the flocculation agent are introduced into the mixing vessel, thereby allowing said turbulence to decrease gradually as the green liquor and flocculation agent move towards the outlet.

Furthermore, the at least one baffle may be arranged opposite a stirring blade of the stirring device. This is advantageous in enabling a more thorough mixing near the stirring device in order to achieve a very high turbulence at the stirring device and in order to also avoid causing further turbulence further away from the stirring device towards the second end.

Also, a plurality of baffles may be arranged around a circumference on the interior wall of the mixing vessel and the stirring blade of the stirring device may be arranged in a center of the mixing vessel between said baffles. This is also advantageous in increasing turbulence at the stirring blade so that a thorough mixing is achieved there.

Suitably, the mixing vessel has an average cross-sectional area, Aₘᵥ, and the vessel outlet has a cross-sectional outlet area, Aₒ, wherein Aₘᵥ ≤ 6 Aₒ. Thereby, the cross-sectional outlet area is rendered large so that very little turbulence is added to the green liquor at or immediately after discharge from the mixing vessel. This in turn is advantageous since it has been found that causing turbulence after the flocculation has occurred may cause particles to come loose from larger clusters created in the flocculated green liquor, so that a rate of small particles in the flocculated green liquor is increased. Such small particles may decrease efficiency of subsequent clarifying of the flocculated green liquor, so by avoiding further turbulence downstream of the mixing vessel quality of the flocculated green liquor is improved.

In some embodiments, the average cross-sectional area of the mixing vessel is related to the cross-sectional outlet area as Aₘᵥ ≤ 5 Aₒ, preferably even as Aₘᵥ ≤ 4 Aₒ. By further increasing the cross-section of the outlet, turbulence can be further minimized as the flocculated green liquor is discharged.

Also, the vessel inlet suitably has a cross-sectional inlet area, Aᵢ, and the vessel outlet has a cross-sectional outlet area, Aₒ, so that Aₒ ≥ 4Aᵢ, preferably Aₒ ≥ 5 Aᵢ, more preferably Aₒ ≥ 6 Aᵢ. By having a much larger outlet than inlet, turbulence in the flocculated green liquor caused by discharge to the outlet can be kept low so that a high quality of the flocculation achieved in the mixing vessel is maintained.

Also, the stirring device suitably comprises a stirring blade that is rotatably arranged in the mixing vessel, said stirring blade being configured to rotate such that an outer portion of the stirring blade in a radial direction is configured to move at a speed of at least 0.3 m/s, preferably at least 1 m/s and more preferably at least 1.5 m/s. Thereby, a thorough mixing is achieved and a high level of turbulence is caused in the green liquor as it is mixed with the flocculation agent. This is advantageous in causing flocculation of the green liquor.

The stirring device may suitably be configured to rotate at at least 10 rpm, preferably at least 30 rpm and more preferably at least 50 rpm. By increasing the rotational speed, mixing of the green liquor with the flocculation agent is improved and turbulence is further increased.

In some embodiments, the mixing vessel is substantially cylindrical. Thereby, turbulence of the green liquor and flocculation agent may be gradually decreased during transport through the mixing vessel towards the outlet.

In other embodiments, the mixing vessel comprises a tapering section that tapers from a wider portion to a narrower portion, said wider portion being closer to the second end than the narrower portion, and wherein the tapering section is preferably conical in shape. Thereby, the turbulence may be further decreased by gradually increasing the volume as the green liquor progresses from the first end to the second end.

Suitably, the mixing vessel is configured to be mounted substantially vertical with the first end as a bottom and the second end as a top. Thereby, mixing takes place at the bottom and the flocculated green liquor is transported upwards, experiencing a gradually decreased turbulence, and then passing towards the outlet to be discharged. Mounting the mixing vessel in a vertical manner is also beneficial in distributing wear and tear of the mixing vessel symmetrically around a circumference of the mixing vessel, whereas other orientations may cause excessive wear in some areas due to gravitation acting on the green liquor and flocculation agent.

Also, the mixing vessel suitably has a volume of less than 10 m³, preferably less than 5 m³, more preferably less than 2 m³. Thereby, small quantities of green liquor may be flocculated in a continuous process that is arranged upstream of a clarifier so that treatment of the green liquor may take place.

Suitably, the vicinity of the first end is a portion of the mixing vessel that extends from the first end less than 20 % of the length, preferably less than 15 % of the length, and more preferably less than 10 % of the length. Also, the vicinity of the second end may be a portion of the mixing vessel that extends from the second end less than 20 % of the length, preferably less than 15 % of the length, and more preferably less than 10 % of the length.

The inventive method for controlling a flocculation of green liquor comprises supplying a flocculation agent and green liquor to a mixing vessel through a vessel inlet, stirring the green liquor and flocculation agent in the mixing vessel, and discharging the green liquor and flocculation agent through a vessel outlet. The green liquor and flocculation agent are transported from the vessel inlet to the vessel outlet during a predetermined time, said predetermined time being at least 30 seconds, preferably at least 40 seconds and more preferably at least 50 seconds. Thereby, it is ensured that the green liquor and flocculation agent are given sufficient time to undergo a thorough mixing followed by a gradual decrease in turbulence so that the quality of flocculation is maintained. Thus, having the green liquor and flocculation agent remaining in the mixing vessel for at least 30 seconds, preferably at least 40 seconds and more preferably at least 50 seconds serves to enable decrease of turbulence in the mixed green liquor and flocculation agent.

Suitably, the method also comprises stirring the green liquor and flocculation agent in the mixing vessel by a stirring blade having an outer portion moving at a speed of at least 0.3 m/s, preferably at least 1 m/s and more preferably at least 1.5 m/s. This is advantageous in achieving a thorough mixing of the green liquor and flocculation agent.

Also, the method may further comprise supplying the flocculation agent and green liquor to the mixing vessel at a first speed in a process direction and discharging the green liquor and flocculation agent from the mixing vessel at a second speed in a process direction, wherein the first speed is at least twice, preferably at least five times and more preferably at least ten times the second speed in the process direction. Thereby, turbulence in the green liquor may be kept low at discharge of the flocculated green liquor, since the speed is allowed to decrease so that a smooth and even flow is achieved.

Also, the method may comprise transporting the flocculation agent and green liquor in the mixing vessel towards the outlet at a third speed in a process direction in a vicinity of the second end, and discharging the green liquor and flocculation agent from the mixing vessel into the outlet at a second speed in a process direction. The third speed does not differ more than 10 % from the second speed, preferably not more than 5 %. Thereby, the green liquor and flocculation agent are allowed to move at a near constant speed in the second end of the mixing vessel and into the outlet, so that variations in speed are largely avoided and creation of additional turbulence is minimized.

Also, the first end of the mixing vessel may be a lower end and the second end may be an upper end, such that the green liquor and flocculation agent are transported at least partly upwards from the vessel inlet to the vessel outlet. This is advantageous in achieving a symmetrical flow of green liquor and decreasing turbulence in a suitable way, while at the same time minimizing wear on the mixing vessel itself.

Many additional benefits and advantages of the present invention will be readily understood by the skilled person in view of the detailed description below.

### DRAWINGS

The invention will now be described in more detail with reference to the appended drawings, wherein
- Fig. 1: discloses a green liquor treatment arrangement comprising a mixing assembly according to a first embodiment of the invention;
- Fig. 2: discloses one embodiment of the mixing assembly according to the invention.

All the figures are schematic, not necessarily to scale, and generally only show parts which are necessary in order to elucidate the respective embodiments, whereas other parts may be omitted or merely suggested. Any reference number appearing in multiple drawings refers to the same object or feature throughout the drawings, unless otherwise indicated.

### DETAILED DESCRIPTION

A green liquor treatment arrangement 10 will now be briefly described, followed by a detailed description of a mixing assembly 20 according to the invention and a description of a method controlling a flocculation of green liquor according to the invention. The mixing assembly 20 may be used in a green liquor treatment arrangement 10 such as that described herein, but alternatively the mixing assembly 20 could also be used in other arrangements or systems where it is desired to achieve a thorough mixing of a green liquor and a flocculation agent.

When in the following the term "operatively connected" is used, this is to be understood as a connection that enables one component to communicate with another by sending and receiving signals, or alternatively as a connection that allows a medium to pass from one component to the other or as one component being connected to the other in such a way that it may control operation of the other.

When the term "substantially cylindrical" is used herein, this is to be understood as cylindrical within manufacturing tolerances. Thus, for the mixing vessel to be substantially cylindrical is to be understood as the mixing vessel comprising a hollow space that is cylindrical in shape such that a cross-sectional area taken anywhere from a first end to a second end of the mixing vessel does not differ more than 10 %, preferably not more than 5 %, of a cross-sectional area taken anywhere else along the hollow space from the first end to the second end.

Also, the term "substantially vertical" is to be understood as a vertical orientation within manufacturing and mounting tolerances. Thus, for a mixing vessel to be mounted or arranged substantially vertically is to be understood s the mixing vessel having a center axis that in the mounted position coincides with a vertical axis or that is oriented at an angle to the vertical axis that is less than 10 %, preferably less than 5 %, more preferably less than 2 %.

The term "process direction" is used herein as a main direction of travel through the green liquor treatment arrangement and the mixing assembly. Thus, inside the mixing vessel of the mixing assembly, the process direction is defined as a direction from the vessel inlet to the vessel outlet.

When the term "upstream" and "downstream" are used herein, this is to be understood in relation to the liquor passing through the green liquor treatment arrangement, i.e. to the process direction. Thus, describing one component as upstream of another means that any given quantity of green liquor passes the upstream component before arriving at the downstream component.

Generation and use of green liquor is well known, particularly within the field of pulp production. The need for treating green liquor to remove particles or solid matter is also well known, and this will therefore not be described in detail below. Rather, a treatment arrangement for treating green liquor will be described briefly and be followed by a more detailed description of the mixing vessel and method for controlling a flocculation of green liquor according to embodiments of the present invention.

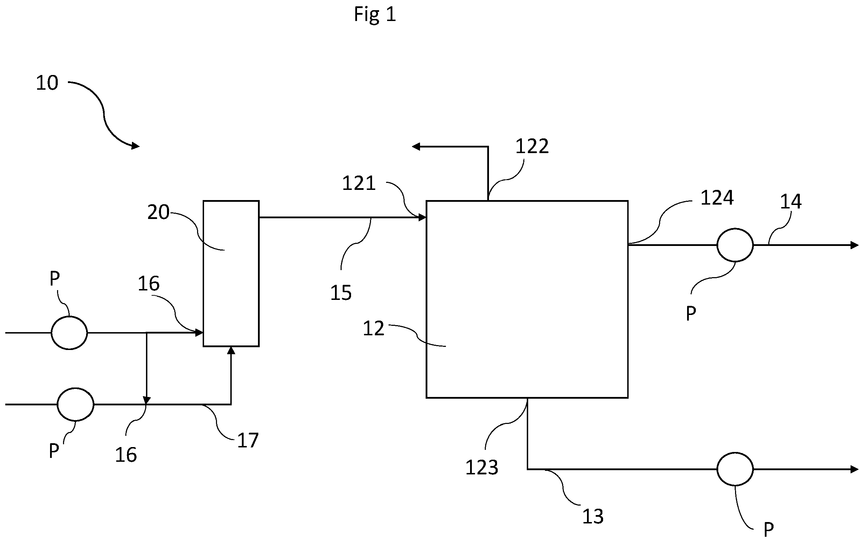

Fig. 1 discloses the green liquor treatment arrangement 10, comprising a first conduit 17 for transporting green liquor into the green liquor treatment arrangement 10 to a mixing vessel 20 according to a first embodiment of the invention where the green liquor is mixed with a flocculation agent. The flocculation agent itself is added to the green liquor in a flocculation inlet 16 that supplies the flocculation agent to the first conduit 17 and/or to the mixing vessel 20. When green liquor is mixed with the flocculation agent, a flocculated green liquor is formed. From the mixing vessel 20, the flocculated green liquor passes through an inlet conduit 15 to an inlet 121 into a clarifier in the form of a clarifying vessel 12 where flocculated matter is removed from the flocculated green liquor through sedimentation. From the clarifying vessel 12, flocculated matter is removed through a sludge outlet 123 and transported in a sludge conduit 13 from the green liquor treatment arrangement 10. Clear green liquor, i.e. flocculated green liquor from which flocculated matter has been removed, is itself removed from the clarifying vessel 12 through an outlet 124 for removing clear green liquor, and is transported in a clear green liquor conduit 14 from the green liquor treatment arrangement 10. The clarifying vessel also comprises a gas outlet 122 for allowing gas to escape while sedimentation takes place inside the clarifying vessel 12. A plurality of pumps P are also suitably provided for pumping liquor and flocculation agent into and through the green liquor treatment arrangement 10, and said pumps P may suitably be arranged in or along each of the conduits transporting clear green liquor and sludge from the clarifying vessel 12.

Operation of the clarifying vessel 12 will not be described in detail herein, suffice it to say that the clarifying vessel 12 is configured to separate flocculated matter from the liquor so that a clear green liquor is achieved. The flocculated matter comprises particles, solid matter and other impurities that form larger groups or clusters of impurities by the flocculation agent acting to connect the impurities to each other in order to facilitate sedimentation. The flocculation agent may be a polymeric substance such as are manufactured by Kemira, Nalco and Kurita, among others.

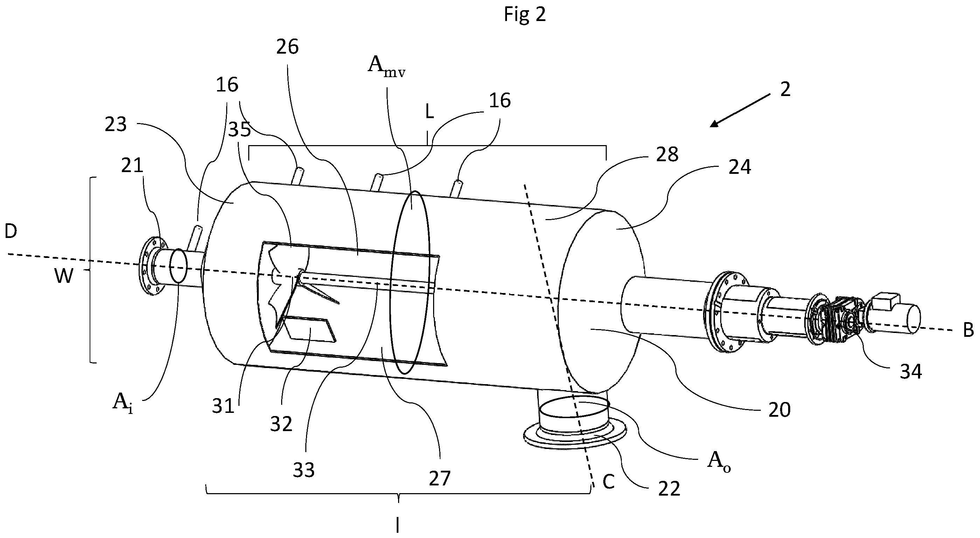

The mixing assembly 2 will now be described in more detail with reference to Fig. 2.

The mixing assembly 2 comprises a mixing vessel 20 that has an outer casing 28 that extends from a first end 23 to a second end 24 and that comprises an inner hollow 26. A vessel inlet 21 is operatively connected to the inner hollow 26 at the first end 23 or in a vicinity of the first end 23 so that green liquor and flocculation agent transported through the vessel inlet 21 is introduced into the inner hollow 26. Also, a vessel outlet 22 is provided in a vicinity of the second end 24 so that green liquor and flocculation agent that has been introduced into the inner hollow 26 may be discharged through the vessel outlet 22.

Also provided in the inner hollow 26 of the mixing vessel 20 is a stirring device 31 that is mounted on a shaft 33 that in turn is journalled at the first end 23 and the second end 24 so that the shaft 33 is able to rotate in order to stir and mix the green liquor and flocculation agent inside the mixing vessel 20 and in the vicinity of the first end 23. The shaft 33 is suitably operated by a motor 34 provided in connection with the shaft 33 outside the mixing vessel 20. The stirring device 31 may comprise one blade or several and may be adapted depending on the application and dimensions of the mixing vessel 20, as will be readily apparent to the skilled person. Depending on the width of the mixing vessel 20, blades of the stirring device 31 may have a length that is suitable for achieving a thorough stirring of the green liquor. In Fig. 2, one embodiment of a stirring device 31 is shown but it is in particular to be noted that this embodiment is merely to be seen as an example and that many modifications of the stirring device 31 are possible within the scope of the appended claims. It is advantageous, however, for the stirring device 31 to be arranged in the vicinity of the first end and for the stirring device 31 or at least its blade(s) 35 to not extend beyond the vicinity of the first end. This ensures a thorough mixing of the flocculated green liquor at the first end and allows turbulence of the flocculated green liquor to decrease as the flocculated green liquor passes along the mixing vessel 20 towards the second end 24.

As used herein, the term "vicinity of the first end" is a portion of the mixing vessel that extends from the first end 23 less than 20 % of a total length L of the mixing vessel 20 from the first end 23 to the second end 24, preferably less than 15 % of the total length, and more preferably less than 10 % of the total length. Similarly, the term "vicinity of the second end" is a portion of the mixing vessel that extends from the second end less than 20 % of the total length L of the mixing vessel 20 from the first end 23 to the second end 24, preferably less than 15 % of the total length, and more preferably less than 10 % of the total length.

The mixing vessel 20 also has a length l from a center of the vessel inlet 21 to a center of the vessel outlet 22, and this length may be seen as an operative length that the green liquor and flocculation agent travel inside the mixing vessel 20 from the vessel inlet 21 to the vessel outlet 22. In the embodiment of Fig. 2, the vessel inlet 21 is provided in the end of the mixing vessel 20 in the first end 23, so the length l is a length from the first end 23 of the mixing vessel 20 to the center of the vessel outlet 22. In some embodiments, the vessel inlet 21 may instead be provided in a side wall of the mixing vessel 20.

The mixing vessel 20 has a maximum width W that is perpendicular to a center axis (B) that extends from the first end 23 to the second end 24 and that is parallel to or coinciding with the shaft 33. The length l is at least 1.5 times the maximum width W. This is particularly advantageous since a length l that is at least 1.5 times the maximum width W of the mixing vessel 20 ensures that the green liquor and flocculation agent travelling through the mixing vessel 20 remains in the mixing vessel 20 for a suitable duration of time so that turbulence caused by the stirring device 31 and suitably also by at least one baffle 32 that is/are arranged on an interior wall 27 of the mixing vessel 20 may decrease before the green liquor and flocculation agent are discharged through the vessel outlet 22.

In some embodiments, the length l is at least 2 times the maximum width W, and in some embodiments the length l is as large as at least 2.2 times the maximum width W. By increasing the length of the mixing vessel 20 in relation to the maximum width W, the green liquor and flocculation agent remains in the mixing vessel 20 even longer so that turbulence is further decreased before discharge through the vessel outlet 22. It is to be noted, however, that although a greater length l is advantageous, the benefit of decreasing turbulence so that the green liquor and flocculation agent may be discharged without decreasing the quality of flocculation in the green liquor is achieved.

When "quality of flocculation" is discussed herein, this term is to be understood as the green liquor being flocculated so that only a very low rate of free particles is present in the green liquor. The desirable high quality of flocculation is created by stirring and mixing the green liquor with the flocculation agent, and as long as turbulence is gradually decreased as the green liquor passes through the mixing vessel this quality is maintained. It is thus advantageous to generate high turbulence in the vicinity of the first end 23 and to avoid creating further turbulence outside the vicinity of the first end so that the quality of flocculation is maintained.

When the relationship between the length l and the maximum width W of the mixing vessel 20 is defined herein, this refers to a length l and maximum width W of the inner hollow 26 of the mixing vessel 20.

It is advantageous to provide a plurality of baffles 32 on the interior wall 26 and especially advantageous to provide them opposite at least one stirring blade 35 of the stirring device so that turbulence is maximized where the stirring device 31 rotates.

In order to avoid causing turbulence outside the vicinity of the first end 23, it is advantageous for each of the baffles 32 to be arranged in the vicinity of the first end 23 so that the interior wall 26 of the inner hollow 26 outside the vicinity of the first end is kept smooth or at least free from larger protruding objects that extend into the inner hollow 26.

In the first embodiment shown in Fig. 2, one baffle 32 may be seen on the interior wall 27, but in other embodiments a plurality of baffles are suitably arranged around a circumference on the interior wall 26 of the mixing vessel 20. The at least one stirring blade 35 of the stirring device 31 is suitably arranged in a center of the mixing vessel 20 between said baffles 32.

In the first embodiment shown in Fig. 2, and also suitably in other embodiments of the present invention, the at least one stirring blade 35 is configured to rotate such that an outer portion of the stirring blade in a radial direction is configured to move at a speed of at least 0.3 m/s, preferably at least 1 m/s and more preferably at least 1.5 m/s. Thereby, high turbulence can be created when the stirring blade 35 moves through the green liquor and flocculation agent.

Also, the stirring device 31 is in the first embodiment of Fig. 2 configured to rotate at 10 rpm or more, preferably at least 30 rpm and more preferably at least 50 rpm. This is also advantageous in generating high turbulence in the vicinity of the first end 23.

The mixing vessel 20 has an average cross-sectional area of the inner hollow 26, Aₘᵥ, that represents an average value from the first end 23 to the second end 24 of a cross-sectional area that is perpendicular to the axis B. The vessel outlet 22 in turn has a cross-sectional outlet area, Aₒ, that is perpendicular to an outlet center axis C in the vessel outlet 22. It is advantageous in order to avoid causing further turbulence at the vessel outlet 22 to have a large cross-sectional outlet area, Aₒ. In the first embodiment of Fig. 2, the cross-sectional outlet area, Aₒ, is one sixth of the average cross-sectional area of the mixing vessel, Aₘᵥ, or larger, so that Aₘᵥ ≤ 6 Aₒ. In some embodiments the cross-sectional outlet is even larger so that the outlet area, Aₒ, is one fifth of the average cross-sectional area, Aₘᵥ, or larger, i.e. Aₘᵥ ≤ 5 Aₒ. In other embodiments, the outlet is larger still so that the cross-sectional outlet area, Aₒ, is one fourth of the average cross-sectional area, Aₘᵥ, or larger, i.e. Aₘᵥ ≤ 4 Aₒ. The benefits of a large outlet 22 is as stated above that further turbulence at the outlet 22 may be minimized or even avoided altogether so that the speed of the green liquor and flocculation agent at the second end 24 of the mixing vessel 20 may be kept constant or near constant during discharge from the mixing vessel 20. Although it is thus advantageous to provide a very large outlet 22, it is to be noted that the advantage of minimizing or even avoiding turbulence may still be achieved at an outlet 22 that has a cross-sectional outlet area, Aₒ, at one sixth of the average cross-sectional area, Aₘᵥ, of the inner hollow 26 of the mixing vessel 20.

The vessel inlet 21 has a cross-sectional inlet area, Aᵢ, perpendicular to an inlet center axis D. It is advantageous for the cross-sectional inlet area, Aᵢ, to be smaller than the cross-sectional outlet area, Aₒ, since this allows for increased speed and turbulence at the inlet where flocculation occurs. Suitably, the cross-sectional outlet area, Aₒ, is at least four times the cross-sectional inlet area, i.e. Aₒ ≥ 4Aᵢ. This allows for a significantly larger turbulence at the vessel inlet 21 than at the vessel outlet 22. In some embodiments, the cross-sectional outlet area, Aₒ, is even larger as compared with the cross-sectional inlet area, Aᵢ, so that Aₒ ≥ 5 Ai, or even Aₒ ≥ 6 Aᵢ. Having a very large difference between the outlet area and the inlet area further increases the difference in turbulence that may be achieved between the vessel inlet 21 and the vessel outlet 22. The inlet center axis D is parallel to or coincides with the center axis B in the embodiment shown in Fig. 2, but it is to be noted that the inlet 21 may in other embodiments be provided at an angle to the center axis B, for instance as an inlet in a side wall of the mixing vessel 20 instead of in the bottom as shown in Fig. 2.

In the first embodiment of the invention, the mixing vessel 20 is substantially cylindrical so that the inner hollow 26 is also substantially cylindrical. This is advantageous in providing a smooth flow through the mixing vessel 20 with high turbulence and rotational speed of the green liquor and flocculation agent in the vicinity of the first end 23 and a gradually decreased speed as the green liquor and flocculation agent proceeds in the process direction towards the vessel outlet 22.

In other embodiments, however, the mixing vessel 20 may instead comprise a tapering section that tapers from a wider portion to a narrower portion, said wider portion being closer to the second end than the narrower portion, and wherein the tapering section is preferably conical in shape. This may be advantageous in achieving a larger turbulence and rotational speed of the green liquor and flocculation agent in the vicinity of the first end, combined with a gradual decrease of turbulence as the green liquor and flocculation agent proceeds in the process direction towards the vessel outlet 22. With a tapering section, the cross-sectional area of the mixing vessel may be increased when proceeding from the first end 23 to the second end 24 and the volume of the inner hollow 26 is thus also increased. By increasing the volume thus, decreasing turbulence inside the mixing vessel 20 may take place in an advantageous and controlled manner.

In the first embodiment of the invention, the mixing vessel 20 is configured to be mounted substantially vertical with the first end 23 as a bottom and the second end 24 as a top. In this orientation, green liquor and flocculation agent enters the inner hollow 26 through the vessel inlet 21 at the bottom end and is transported upwards, away from the stirring device 31 and towards the vessel outlet 22 near the top. One advantage of placing the mixing vessel 20 substantially vertically is that gravitational force acting on the green liquor and flocculation agent may be used to decrease speed and turbulence during transportation towards the vessel outlet 22. Another advantage is that mounting the mixing vessel 20 in this way in a green liquor treatment arrangement 10 allows for feeding the flocculated green liquor into the clarifying vessel 12 without causing further turbulence due to pipe bends or even pumps that could be required in order to transport the flocculated green liquor towards the inlet into the clarifying vessel 12. Due to limitations in available space where green liquor treatment arrangements are arranged, it is advantageous to be able to avoid placing the mixing vessel 20 at a height above the clarifying vessel 12 but still being able to feed the flocculated green liquor to an inlet of the clarifying vessel 12 arranged near a top of the clarifying vessel 12 to allow for efficient sedimentation. By arranging the mixing vessel 20 in a substantially vertical orientation with the vessel outlet 22 near the top this can be achieved while still avoiding additional turbulence between the mixing vessel 20 and the clarifying vessel 12 that pipe bends and/or pumps would cause.

In other embodiments, the mixing vessel 20 could instead have another orientation, such as a horizontal orientation with the center axis B being parallel to a horizontal axis. Alternatively, the mixing vessel 20 could be arranged in any other orientation.

In the first embodiment, the mixing vessel 20 has a volume of less than 10 m³, preferably less than 5 m³, more preferably less than 2 m³. By keeping the volume of the inner hollow 26 of the mixing vessel 20 low, an efficient mixing of the green liquor and the flocculation agent can be achieved and a desired quantity per unit of time can be fed to the clarifying vessel 12.

The flocculation inlet 16 may be connected to the first conduit 17, as shown in Fig. 1. However, flocculation inlets 16 may also be provided to the vessel inlet 21 of the mixing vessel 20 and also to the mixing vessel 20 itself. Fig. 2 discloses suitable placements for such flocculation inlets 16, but it is to be noted that the flocculation inlets 16 may be more or fewer than those shown in Fig. 2, and that in some embodiments it may be suitable to provide a flocculation inlet 16 only to the first conduit 17, while in other embodiments it may instead be suitable to provide at least one flocculation inlet 16 in the vessel inlet 21 or in the mixing vessel 20 itself and to provide the first conduit 17 without flocculation inlets altogether.

The method according to the present invention will now be described in more detail, disclosing how flocculation of green liquor is controlled using the mixing vessel 20 of the mixing assembly 2. Although the method is referred to as a method for controlling flocculation of green liquor, it is to be noted that this intended purpose may alternatively be referred to as controlling mixing of green liquor and a flocculation agent. These two purposes are therefore used interchangeably when referring to the method and mixing assembly of the present invention.

The mixing assembly 2 with the mixing vessel 20 is suitably used in a continuous process where green liquor is continuously supplied to the mixing vessel and a continuous flow through the inner hollow 26 is achieved. This is advantageous in providing a steady supply of flocculated green liquor to the clarifying vessel 12.

Thus, green liquor and the flocculation agent are supplied to the mixing vessel 20 through the vessel inlet 21 and is stirred by the stirring device 31. Since the stirring device 31 is suitable located in the vicinity of the first end 23, green liquor and flocculation agent are stirred only a short time after entering through the vessel inlet, preferably in the range of 1-10 s after entering the vessel inlet 21, more preferably around 5 s after entering. By the stirring device 31 acting on the green liquor and flocculation agent and preferably also by providing the baffles 32, a vigorous stirring is achieved so that high turbulence is created, and a rotational speed of the green liquor and flocculation agent is achieved. Through the high speed and the turbulence in general, the contact between the green liquor and the flocculation agent is maximized so that flocculation occurs.

After stirring and mixing, the green liquor and flocculation agent are transported through the mixing vessel 20 and discharged through the vessel outlet 22. The transport of any given volume of the green liquor and the flocculation agent from the vessel inlet 21 to the vessel outlet 22 takes at least 30 seconds, thereby allowing for a gradual decrease of rotational speed of the green liquor and flocculation agent so that turbulence decreases as the green liquor and flocculation agent approaches the vessel outlet 22. In some embodiments, the transport takes even longer, preferably at least 40 seconds or even at least 50 seconds, and this is beneficial in allowing for turbulence of the green liquor and flocculation agent to decrease further before discharge takes place.

In the first embodiment, the flocculation agent and green liquor is supplied to the mixing vessel 20 through the vessel inlet 21 at a first speed in the process direction and is discharged through the vessel outlet 22 at a second speed in the process direction, so that the first speed is at least twice, preferably at least five times and more preferably at least 10 times the second speed. To decrease the velocity in the process direction during transport through the mixing vessel 20, turbulence is further decreased so that a high quality of flocculation is maintained.

In some experiments, it has been shown that even when flocculation takes place so that a high quality of flocculation is achieved, i.e. a very low rate of remaining particles that are not joined to other particles by means of the flocculation agent, the quality may decrease if turbulence is added since this may cause small particles to come loose from the larger clusters formed by the flocculation so that the rate of small particles in the flocculated green liquor increases again. It has been found that this may be minimized or even eliminated by gradually decreasing speed in rotational direction of the green liquor and flocculation agent after flocculation has taken place, so that the larger clusters may be transported without being disturbed by added turbulence later on.

It is especially beneficial to ensure that the velocity in the process direction at the second end 24 of the mixing vessel 20 remains constant or near constant as the green liquor and flocculation agent are discharged through the vessel outlet 22. Thereby, the quality of flocculation may be maintained so that subsequent sedimentation in the clarifying vessel 12 is as efficient as possible. Thus, when transporting the green liquor and flocculation agent towards the vessel outlet 22 so that the green liquor and flocculation agent has a third speed in the process direction in the vicinity of the second end 24, it is advantageous that this third speed does not differ more than 10 % from the second speed, preferably not more than 5 % in the process direction.

By arranging or mounting the mixing vessel 20 in a vertical orientation the green liquor and flocculation agent are transported at least partly upwards during transport from the vessel inlet 21 to the vessel outlet 22. This achieves the benefits described above.

## Claims

1. A green liquor treatment arrangement (10) comprising a mixing assembly (2) for controlling mixing of green liquor and a flocculation agent, the mixing assembly (2) comprising
- a mixing vessel (20) having a first end (23) and a second end (24),
- a vessel inlet (21) for supplying green liquor and flocculation agent to the mixing vessel in a vicinity of the first end,
- a vessel outlet (22) for removing flocculated green liquor from the mixing vessel in a vicinity of the second end,
- a stirring device (31) that is rotatably arranged in the vicinity of the first end for mixing the green liquor and flocculation agent by stirring,
- the mixing vessel (20) has a length (l) from a center of the vessel inlet to a center of the vessel outlet, and the mixing vessel also has a maximum width (W) that is perpendicular to a center axis (B) that extends from the first end (23) to the second end (24), and wherein said length (l) is at least 1.5 times the maximum width (W) for enabling decrease of turbulence in the mixed green liquor and flocculation agent
wherein the green liquor treatment arrangement (10) further comprises a clarifying vessel (12) where green liquor from the mixing vessel (20) passes through an inlet conduit (15) to an inlet (121) into the clarifying vessel (12) where flocculated matter is removed from the flocculated green liquor through sedimentation.

2. A green liquor treatment arrangement (10) according to claim 1, wherein the length (l) of the mixing vessel (20) is at least 2 times the maximum width, preferably at least 2.2 times the maximum width.

3. A green liquor treatment arrangement (10) according to claim 1 or 2, further comprising at least one baffle (32), preferably a plurality of baffles, that is/are arranged on an interior wall of the mixing vessel in the vicinity of the first end.

4. A green liquor treatment arrangement (10) according to claim 3, wherein each baffle (32) of the mixing assembly is arranged in the vicinity of the first end (23).

5. A green liquor treatment arrangement (10) according to claim 3 or 4, wherein the at least one baffle (32) is arranged opposite a stirring blade (35) of the stirring device (35).

6. A green liquor treatment arrangement (10) according to claim 5, wherein a plurality of baffles (32) are arranged around a circumference on the interior wall (26) of the mixing vessel and wherein the stirring blade (35) of the stirring device (31) is arranged in a center of the mixing vessel between said baffles (32).

7. A green liquor treatment arrangement (10) according to any previous claim, wherein the mixing vessel (20) is substantially cylindrical.

8. A green liquor treatment arrangement (10) according to any of claims 1-6, wherein the mixing vessel (20) comprises a tapering section that tapers from a wider portion to a narrower portion, said wider portion being closer to the second end (24) than the narrower portion, and wherein the tapering section is preferably conical in shape.

9. A green liquor treatment arrangement (10) according to any previous claim, wherein the mixing vessel (20) is configured to be mounted substantially vertical with the first end as a bottom and the second end as a top.

10. A green liquor treatment arrangement (10) according to any previous claim, wherein the mixing vessel (20) has a volume of less than 10 m³, preferably less than 5 m³, more preferably less than 2 m³.

11. A green liquor treatment arrangement (10) according to any previous claim, wherein the vicinity of the first end (23) is a portion of the mixing vessel that extends from the first end less than 20 % of the length, preferably less than 15 % of the length, and more preferably less than 10 % of the length and/or the vicinity of the second end (24) is a portion of the mixing vessel that extends from the second end less than 20 % of the length, preferably less than 15 % of the length, and more preferably less than 10 % of the length.

12. Method for controlling a flocculation of green liquor, the method comprising:
- providing a a green liquor treatment arrangement (10) according to any of claims 1-11,
- supplying a flocculation agent and green liquor to the mixing vessel (20) through the vessel inlet (21),
- stirring the green liquor and flocculation agent in the mixing vessel (20),
- discharging the green liquor and flocculation agent through the vessel outlet (22),
wherein the green liquor and flocculation agent are transported from the vessel inlet (21) to the vessel outlet (22) during a predetermined time, said predetermined time being at least 30 seconds, preferably at least 40 seconds and more preferably at least 50 seconds for enabling decrease of turbulence in the mixed green liquor and flocculation agent, and
wherein the green liquor treatment arrangement (10) further comprises a clarifying vessel (12) where green liquor from the mixing vessel (20) passes through an inlet conduit (15) to an inlet (121) into the clarifying vessel (12) where flocculated matter is removed from the flocculated green liquor through sedimentation.

13. Method according to claim 12, the method also comprising
- stirring the green liquor and flocculation agent in the mixing vessel (20) by a stirring blade (35) having an outer portion moving at a speed of at least 0.3 m/s, preferably at least 1 m/s and more preferably at least 1.5 m/s.

14. Method according to claim 12 or 13, further comprising
- supplying the flocculation agent and green liquor to the mixing vessel (20) at a first speed in a process direction, and
- discharging the green liquor and flocculation agent from the mixing vessel (20) at a second speed in a process direction,
wherein the first speed is at least twice, preferably at least five times and more preferably at least ten times the second speed in the process direction.

15. Method according to any of claims 12-14, further comprising
- transporting the flocculation agent and green liquor in the mixing vessel (20) towards the vessel outlet (22) at a third speed in a process direction in a vicinity of the second end, and
- discharging the green liquor and flocculation agent from the mixing vessel into the vessel outlet (22) at a second speed in a process direction,
wherein the third speed does not differ more than 10 % from the second speed, preferably not more than 5 %.

## Patentansprüche

1. Grünlaugenbehandlungsanordnung (10), umfassend eine Mischbaugruppe (2) zum Steuern eines Mischens von Grünlauge und einem Flockungsmittel, die Mischbaugruppe (2) umfassend
- ein Mischgefäß (20), das ein erstes Ende (23) und ein zweites Ende (24) aufweist,
- einen Gefäßeinlass (21) zum Zuführen von Grünlauge und Flockungsmittel zu dem Mischgefäß in einer Nähe des ersten Endes,
- einen Gefäßauslass (22) zum Entfernen von ausgeflockter Grünlauge aus dem Mischgefäß in einer Nähe des zweiten Endes,
- eine Rührvorrichtung (31), die in der Nähe des ersten Endes zum Mischen der Grünlauge und des Flockungsmittels durch Rühren drehbar angeordnet ist,
- wobei das Mischgefäß (20) eine Länge (I) von einer Mitte des Gefäßeinlasses zu einer Mitte des Gefäßauslasses aufweist, und das Mischgefäß auch eine maximale Breite (W) aufweist, die senkrecht zu einer Mittelachse (B) ist, die sich von dem ersten Ende (23) zu dem zweiten Ende (24) erstreckt, und wobei die Länge (I) mindestens das 1,5-Fache der maximalen Breite (W) zum Ermöglichen einer Verringerung von Turbulenz in der gemischten Grünlauge und dem Flockungsmittel beträgt,
wobei die Grünlaugenbehandlungsanordnung (10) ferner ein Klärungsgefäß (12) umfasst, wo Grünlauge aus dem Mischgefäß (20) durch eine Einlassleitung (15) zu einem Einlass (121) in das Klärungsgefäß (12) geleitet wird, wo flockierte Materie aus der flockierten Grünlauge durch Sedimentation entfernt wird.

2. Grünlaugenbehandlungsanordnung (10) nach Anspruch 1, wobei die Länge (I) des Mischgefäßes (20) mindestens das 2-Fache der maximalen Breite beträgt, vorzugsweise mindestens das 2,2-Fache der maximalen Breite.

3. Grünlaugenbehandlungsanordnung (10) nach Anspruch 1 oder 2, ferner umfassend mindestens eine Prallplatte (32), vorzugsweise eine Vielzahl von Prallplatten, die an einer Innenwand des Mischgefäßes in der Nähe des ersten Endes angeordnet ist/sind.

4. Grünlaugenbehandlungsanordnung (10) nach Anspruch 3, wobei jede Prallplatte (32) der Mischbaugruppe in der Nähe des ersten Endes (23) angeordnet ist.

5. Grünlaugenbehandlungsanordnung (10) nach Anspruch 3 oder 4, wobei die mindestens eine Prallplatte (32) gegenüber einem Rührblatt (35) der Rührvorrichtung (35) angeordnet ist.

6. Grünlaugenbehandlungsanordnung (10) nach Anspruch 5, wobei eine Vielzahl von Prallplatten (32) um einen Umfang an der Innenwand (26) des Mischgefäßes angeordnet sind und wobei das Rührblatt (35) der Rührvorrichtung (31) in einer Mitte des Mischgefäßes zwischen den Prallplatten (32) angeordnet ist.

7. Grünlaugenbehandlungsanordnung (10) nach einem der vorstehenden Ansprüche, wobei das Mischgefäß (20) im Wesentlichen zylindrisch ist.

8. Grünlaugenbehandlungsanordnung (10) nach einem der Ansprüche 1 bis 6, wobei das Mischgefäß (20) einen sich verjüngenden Abschnitt umfasst, der sich von einem breiteren Bereich zu einem schmaleren Bereich verjüngt, wobei sich der breitere Bereich näher an dem zweiten Ende (24) als der schmalere Bereich befindet, und wobei der sich verjüngende Abschnitt vorzugsweise konisch geformt ist.

9. Grünlaugenbehandlungsanordnung (10) nach einem der vorstehenden Ansprüche, wobei das Mischgefäß (20) konfiguriert ist, um mit dem erste Ende als ein Boden und dem zweiten Ende als eine Oberseite im Wesentlichen vertikal montiert zu werden.

10. Grünlaugenbehandlungsanordnung (10) nach einem der vorstehenden Ansprüche, wobei das Mischgefäß (20) ein Volumen von weniger als 10 m³ aufweist, vorzugsweise weniger als 5 m³, mehr bevorzugt weniger als 2 m³.

11. Grünlaugenbehandlungsanordnung (10) nach einem der vorstehenden Ansprüche, wobei die Nähe des ersten Endes (23) ein Abschnitt des Mischgefäßes ist, der sich von dem ersten Ende weniger als 20 % der Länge, vorzugsweise weniger als 15 % der Länge und mehr bevorzugt weniger als 10 % der Länge erstreckt und/oder die Nähe des zweiten Endes (24) ein Abschnitt des Mischgefäßes ist, der sich von dem zweiten Ende weniger als 20 % der Länge, vorzugsweise weniger als 15 % der Länge und mehr bevorzugt weniger als 10 % der Länge erstreckt.

12. Verfahren zum Steuern einer Flockung von Grünlauge, das Verfahren umfassend:
- Bereitstellen einer Grünlaugenbehandlungsanordnung (10) nach einem der Ansprüche 1 bis 11,
- Zuführen eines Flockungsmittels und einer Grünlauge zu dem Mischgefäß (20) durch den Gefäßeinlass (21),
- Rühren der Grünlauge und des Flockungsmittels in dem Mischgefäß (20),
- Abführen der Grünlauge und des Flockungsmittels durch den Gefäßauslass (22),
wobei die Grünlauge und das Flockungsmittel von dem Gefäßeinlass (21) zu dem Gefäßauslass (22) während einer vorbestimmten Zeit transportiert werden, wobei die vorbestimmte Zeit mindestens 30 Sekunden, vorzugsweise mindestens 40 Sekunden und mehr bevorzugt mindestens 50 Sekunden beträgt, zum Ermöglichen der Verringerung der Turbulenz in der gemischten Grünlauge und dem Flockungsmittel, und
wobei die Grünlaugenbehandlungsanordnung (10) ferner ein Klärungsgefäß (12) umfasst, wo Grünlauge aus dem Mischgefäß (20) durch eine Einlassleitung (15) zu einem Einlass (121) in das Klärungsgefäß (12) geleitet wird, wo flockierte Materie aus der flockierten Grünlauge durch Sedimentation entfernt wird.

13. Verfahren nach Anspruch 12, das Verfahren ferner umfassend
- Rühren der Grünlauge und des Flockungsmittels in dem Mischgefäß (20) durch ein Rührblatt (35), das einen äußeren Abschnitt aufweist, der sich mit einer Geschwindigkeit von mindestens 0,3 m/s, vorzugsweise mindestens 1 m/s und mehr bevorzugt mindestens 1,5 m/s bewegt.

14. Verfahren nach Anspruch 12 oder 13, ferner umfassend
- Zuführen des Flockungsmittels und der Grünlauge zu dem Mischgefäß (20) mit einer ersten Geschwindigkeit in einer Prozessrichtung, und
- Abführen der Grünlauge und des Flockungsmittels aus dem Mischgefäß (20) mit einer zweiten Geschwindigkeit in einer Prozessrichtung,
wobei die erste Geschwindigkeit mindestens zweimal, vorzugsweise mindestens fünfmal und mehr bevorzugt mindestens zehnmal die zweite Geschwindigkeit in der Prozessrichtung beträgt.

15. Verfahren nach einem der Ansprüche 12 bis 14, ferner umfassend
- Transportieren des Flockungsmittels und der Grünlauge in dem Mischgefäß (20) in Richtung des Gefäßauslasses (22) mit einer dritten Geschwindigkeit in einer Prozessrichtung in einer Nähe des zweiten Endes, und
- Abführen der Grünlauge und des Flockungsmittels aus dem Mischgefäß in den Gefäßauslass (22) mit einer zweiten Geschwindigkeit in einer Prozessrichtung,
wobei sich die dritte Geschwindigkeit um nicht mehr als 10 % von der zweiten Geschwindigkeit unterscheidet, vorzugsweise um nicht mehr als 5 %.

## Revendications

1. Agencement de traitement de liqueur verte (10) comprenant un ensemble de mélange (2) permettant de contrôler le mélange de liqueur verte et d'un agent de floculation, l'ensemble de mélange (2) comprenant
- une cuve de mélange (20) ayant une première extrémité (23) et une seconde extrémité (24),
- une entrée de cuve (21) permettant d'amener de la liqueur verte et un agent de floculation à la cuve de mélange à proximité de la première extrémité,
- une sortie de cuve (22) permettant de retirer la liqueur verte floculée de la cuve de mélange à proximité de la seconde extrémité,
- un dispositif d'agitation (31) qui est agencé de manière rotative à proximité de la première extrémité permettant de mélanger la liqueur verte et l'agent de floculation par agitation,
- la cuve de mélange (20) a une longueur (1) depuis un centre de l'entrée de cuve jusqu'à un centre de la sortie de cuve, et la cuve de mélange a également une largeur maximale (W) qui est perpendiculaire à un axe central (B) qui s'étend depuis la première extrémité (23) jusqu'à la seconde extrémité (24), et dans lequel ladite longueur (1) est au moins 1,5 fois supérieure à la largeur maximale (W) pour permettre une diminution de la turbulence dans le liqueur vert mélangé et l'agent de floculation
dans lequel l'agencement de traitement de liqueur verte (10) comprend en outre une cuve de clarification (12) où de la liqueur verte provenant de la cuve de mélange (20) passe à travers un conduit d'entrée (15) vers une entrée (121) dans la cuve de clarification (12) où de la matière floculée est retirée de la liqueur verte floculée par sédimentation.

2. Agencement de traitement de liqueur verte (10) selon la revendication 1, dans lequel la longueur (1) de la cuve de mélange (20) est d'au moins 2 fois la largeur maximale, de préférence d'au moins 2,2 fois la largeur maximale.

3. Agencement de traitement de liqueur verte (10) selon la revendication 1 ou 2, comprenant en outre au moins un déflecteur (32), de préférence une pluralité de déflecteurs, qui est/sont agencés sur une paroi intérieure de la cuve de mélange à proximité de la première extrémité.

4. Agencement de traitement de liqueur verte (10) selon la revendication 3, dans lequel chaque déflecteur (32) de l'ensemble de mélange est agencé à proximité de la première extrémité (23).

5. Agencement de traitement de liqueur verte (10) selon la revendication 3 ou 4, dans lequel l'au moins un déflecteur (32) est agencé à l'opposé d'une pale d'agitation (35) du dispositif d'agitation (35).

6. Agencement de traitement de liqueur verte (10) selon la revendication 5, dans lequel une pluralité de déflecteurs (32) sont agencés autour d'une circonférence sur la paroi intérieure (26) de la cuve de mélange et dans lequel la pale d'agitation (35) du dispositif d'agitation (31) est agencée dans un centre de la cuve de mélange entre lesdits déflecteurs (32).

7. Agencement de traitement de liqueur verte (10) selon l'une quelconque revendication précédente, dans lequel la cuve de mélange (20) est sensiblement cylindrique.

8. Agencement de traitement de liqueur verte (10) selon l'une quelconque des revendications 1 à 6, dans lequel la cuve de mélange (20) comprend une section effilée qui s'effile depuis une partie plus large jusqu'à une partie plus étroite, ladite partie plus large étant plus proche de la seconde extrémité (24) que la partie plus étroite, et dans lequel la section effilée est de préférence de forme conique.

9. Agencement de traitement de liqueur verte (10) selon l'une quelconque revendication précédente, dans lequel la cuve de mélange (20) est conçue pour être montée sensiblement verticale avec la première extrémité en guise de fond et la seconde extrémité en guise de sommet.

10. Agencement de traitement de liqueur verte (10) selon l'une quelconque revendication précédente, dans lequel la cuve de mélange (20) a un volume inférieur à 10 m³, de préférence inférieur à 5 m³, plus préférablement inférieur à 2 m³.

11. Agencement de traitement de liqueur verte (10) selon l'une quelconque revendication précédente, dans lequel la proximité de la première extrémité (23) est une partie de la cuve de mélange qui s'étend depuis la première extrémité sur moins de 20 % de la longueur, de préférence moins de 15 % de la longueur, et plus préférablement moins de 10 % de la longueur et/ou la proximité de la seconde extrémité (24) est une partie de la cuve de mélange qui s'étend depuis la seconde extrémité inférieure à 20 % de la longueur, de préférence inférieure à 15 % de la longueur, et plus préférablement inférieure à 10 % de la longueur.

12. Procédé permettant de contrôler une floculation d'une liqueur verte, le procédé comprenant :
- la fourniture d'un agencement de traitement de liqueur verte (10) selon l'une quelconque des revendications 1 à 11,
- l'amenée d'un agent de floculation et d'une liqueur verte dans la cuve de mélange (20) par l'entrée de cuve (21),
- l'agitation de la liqueur verte et de l'agent de floculation dans la cuve de mélange (20),
- le déchargement de la liqueur verte et de l'agent de floculation par la sortie de cuve (22),
dans lequel la liqueur verte et l'agent de floculation sont transportés depuis l'entrée de cuve (21) jusqu'à la sortie de cuve (22) pendant un temps prédéterminé, ledit temps prédéterminé étant d'au moins 30 secondes, de préférence d'au moins 40 secondes et plus préférablement d'au moins 50 secondes pour permettre une diminution de la turbulence dans la liqueur verte et l'agent de floculation mélangés, et
dans lequel l'agencement de traitement de liqueur verte (10) comprend en outre une cuve de clarification (12) où de la liqueur verte provenant de la cuve de mélange (20) passe à travers un conduit d'entrée (15) vers une entrée (121) dans la cuve de clarification (12) où de la matière floculée est retirée de la liqueur verte floculée par sédimentation.

13. Procédé selon la revendication 12, le procédé comprenant également
- l'agitation de la liqueur verte et l'agent de floculation dans la cuve de mélange (20) par une pale d'agitation (35) ayant une partie extérieure se déplaçant à une vitesse d'au moins 0,3 m/s, de préférence d'au moins 1 m/s et plus préférablement d'au moins 1,5 m/s.

14. Procédé selon la revendication 12 ou 13, comprenant en outre
- l'amenée de l'agent de floculation et de la liqueur verte à la cuve de mélange (20) à une première vitesse dans une direction de traitement, et
- le déchargement de la liqueur verte et de l'agent de floculation depuis la cuve de mélange (20) à une seconde vitesse dans une direction de traitement,
dans lequel la première vitesse est au moins deux fois, de préférence au moins cinq fois et plus préférablement au moins dix fois la seconde vitesse dans la direction de traitement.

15. Procédé selon l'une quelconque des revendications 12 à 14, comprenant en outre
- le transport de l'agent de floculation et de la liqueur verte dans la cuve de mélange (20) vers la sortie de cuve (22) à une troisième vitesse dans une direction de traitement à proximité de la seconde extrémité, et
- le déchargement de la liqueur verte et de l'agent de floculation de la cuve de mélange dans la sortie de cuve (22) à une seconde vitesse dans une direction de traitement,
dans lequel la troisième vitesse ne diffère pas de plus de 10 % de la deuxième vitesse, de préférence de pas plus de 5 %.
